# EUROPEAN PATENT APPLICATION

(11) **EP 4 459 817 A1**
(43) Date of publication of application: **06.11.2024**
(21) Application number: 24170911.2
(22) Date of filing: 17.04.2024
(51) Int. Cl.: H02G 3/06, F16B 43/00, F16L 5/06, F16L 41/14, H02G 15/04, H02G 15/013

(54) **TOOLLESS COMPRESSION MECHANISMS**

(30) Priority: 18.04.2023 US 202363460214 P
(71) Applicant: Corning Research and Development Corporation, Corning, NY 14831 (US)
(72) Inventor: Gormand, Mickael Yann Daniel, 44160 Pontchateau (FR); Hoehn, Holger, 12555 Berlin (DE); Kluwe, Wolf Peter, 58119 Hagen (DE); Wilcox, Dayne, El Cerrito, 94530 (US)
(74) Representative: Elkington and Fife LLP

(57) **Abstract**

A toolless compression mechanism includes an upper compression element having a plurality of wings surrounding a hub, a base having a locator element positioned on an underside surface of the base, and a hub extension having inner threads disposed therein; an intermediate compression element having an upper intermediate compression surface having a channel that upon assembly of the toolless compression mechanism mates with upper compression element; a lower compression segment having an extension with threads that mates with the inner threads of the upper compression element, and a sealing element positioned between the intermediate compression element and the lower compression segment. When turned, the upper compression element is displaced along the hub extension such that the sealing element is compressed.

## Description

### CROSS-REFERENCE TO RELATED APPLICATIONS

This application claims the benefit of priority of U.S. Provisional Application Serial No. 63/460,214, filed on April 18, 2023, the content of which is relied upon and incorporated herein by reference in its entirety.

### BACKGROUND

The present disclosure generally relates to toolless compression mechanisms, and particularly toolless compression mechanisms incorporated into closures that use gel or gel-ike sealing elements.

Telecommunications systems include various networks, subsystems and components that allow for the transmission of data and voice signals over long distances. Telecommunications closures make up part of these networks and subsystems. Telecommunications closures house and protect telecommunications components such as splices, termination panels, power splitters and wavelength division multiplexers.

Telecommunications closures are typically sealed to protect components inside of the closure from environmental exposure. For example, telecommunications are designed inhibit the intrusion of moisture, bugs, and other types of contaminants. Some types of closures use sealing elements manufactured from gel or gel-like substances. When these types of sealing elements are used, there is a benefit in compressing the sealing elements to increase the effective sealing area.

Moreover, these gel and gel-like sealing elements are typically of an elastic nature and are more effective when compressed to seal nearby or adjoining closure components such as cable ports. Current methods typically use some types of tool to activate compression of the sealing elements. For example, some installers will use a screwdriver or a similar tool to activate compression. But the use of tools like these increase installation time and add to the complexity of installation procedures. While some of these compression mechanisms are effective, there is still a need for improvements in this area.

### SUMMARY

Embodiments disclosed herein are directed to toolless compression mechanisms, components, and methods of assembling toolless compression mechanisms.

According to one aspect, a toolless compression mechanism includes an upper compression element having a plurality of wings surrounding a hub, a base having a locator element positioned on an underside surface of the base, and a hub extension having inner threads disposed therein; an intermediate compression element having an upper intermediate compression surface having a channel that upon assembly of the toolless compression mechanism mates with upper compression element; a lower compression segment having an extension with threads that mates with the inner threads of the upper compression element, and a sealing element positioned between the intermediate compression element and the lower compression segment, wherein when turned, the upper compression element is displaced along the extension such that the sealing element is compressed. It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate embodiments, and together with the description serve to explain principles and operation of the various embodiments.

### BRIEF DESCRIPTION OF THE DRAWINGS

The accompanying drawings are included to provide a further understanding and are incorporated in and constitute a part of this specification. The drawings illustrate one or more embodiment(s), and together with the description serve to explain the principles and operation of the various embodiments.
FIG. 1 is an isometric view of an assembled toolless compression mechanism, according to various aspects of the present disclosure.
FIG. 2 is a side view of the assembled toolless compression mechanism, shown in FIG. 1, according to various aspects of the present disclosure.
FIG. 3 is a bottom isometric view of an upper compression element, according to various aspects of the present disclosure.
FIG. 4 is a top isometric view of an intermediate compression element, according to various aspects of the present disclosure.
FIG. 5 is a side view of a lower compression segment, according to various aspects of the present disclosure.
FIGs. 6A is a side isometric view of an assembled toolless compression mechanism in a first position, according to various aspects of the present disclosure.
FIGs. 6B is a side isometric view of an assembled toolless compression mechanism in a second position, according to various aspects of the present disclosure.
FIGs. 7A is a top isometric view of an assembled toolless compression mechanism in a first position, according to various aspects of the present disclosure.
FIGs. 7B is a top isometric view of an assembled toolless compression mechanism in a second position, according to various aspects of the present disclosure.
FIG. 8 is an isometric view of an assembled toolless compression mechanism, according to various aspects of the present disclosure.
FIG. 9 is a side view of the assembled toolless compression mechanism, shown in FIG. 8, according to various aspects of the present disclosure.
FIG. 10A is a side isometric view of an upper compression element, according to various aspects of the present disclosure.
FIG. 10B is a bottom isometric view of an upper compression element, according to various aspects of the present disclosure.
FIG. 11 is a top isometric view of an intermediate compression element, according to various aspects of the present disclosure.
FIG. 12 is a side view of a lower compression segment, according to various aspects of the present disclosure.
FIG. 13A is a top isometric view of an assembled toolless compression mechanism in a first position, according to various aspects of the present disclosure.
FIGs. 13B is a top isometric view of an assembled toolless compression mechanism in a second position, according to various aspects of the present disclosure.

The figures are not necessarily to scale. Like numbers used in the figures may be used to refer to like components. However, it will be understood that the use of a number to refer to a component in a given figure is not intended to limit the component in another figure labeled with the same number.

### DETAILED DESCRIPTION

Various exemplary embodiments of the disclosure will now be described with particular reference to the Drawings. Exemplary embodiments of the present disclosure may take on various modifications and alterations without departing from the spirit and scope of the disclosure. Accordingly, it is to be understood that the embodiments of the present disclosure are not limited to the described exemplary embodiments, but are to be controlled by the limitations set forth in the claims and any equivalents thereof.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

Spatially related terms, including but not limited to, "lower," "upper," "beneath," "below," "above," and "on top," if used herein, are utilized for ease of description to describe spatial relationships of an element(s) to another. Such spatially related terms encompass different orientations of the device in use or operation in addition to the particular orientations depicted in the figures and described herein. For example, if an object depicted in the figures is turned over or flipped over, portions previously described as below or beneath other elements would then be above those other elements.

Cartesian coordinates may be used in some of the Figures for reference and are not intended to be limiting as to direction or orientation.

For purposes of description herein, the terms "upper," "lower," "right," "left," "rear," "front," "vertical," "horizontal," "top," "bottom," "side," and derivatives thereof, shall relate to the disclosure as oriented with respect to the Cartesian coordinates in the corresponding Figure, unless stated otherwise. However, it is to be understood that the disclosure may assume various alternative orientations, except where expressly specified to the contrary.

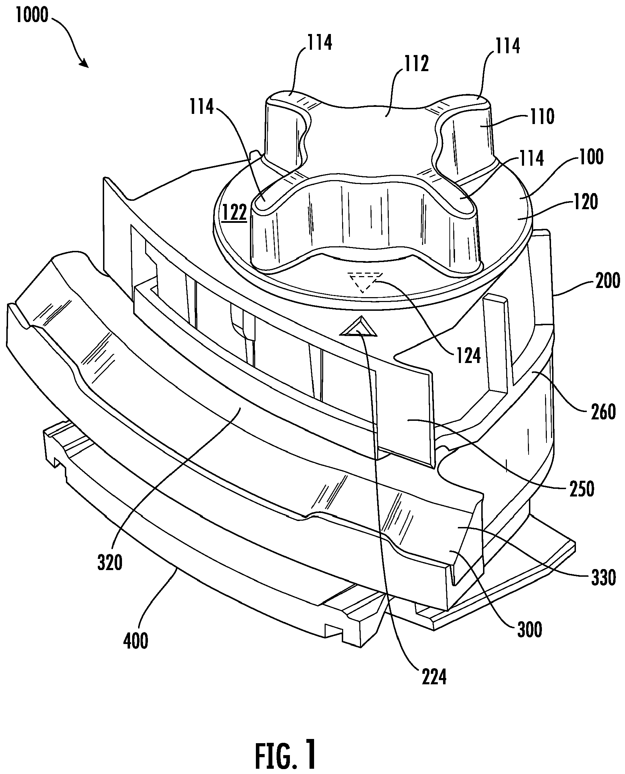

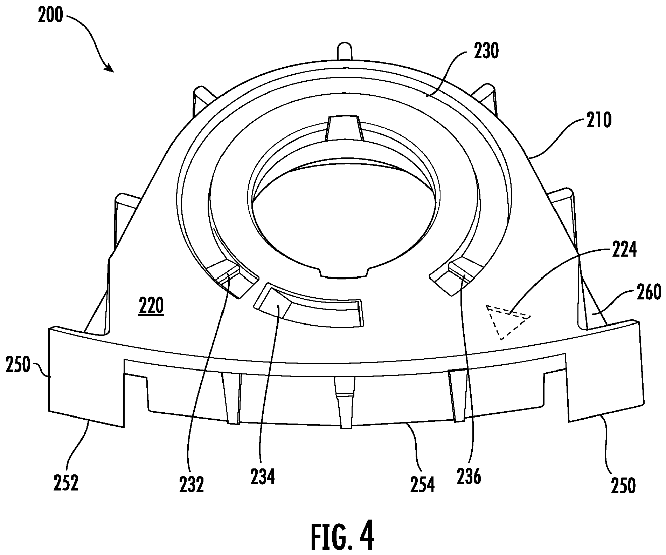

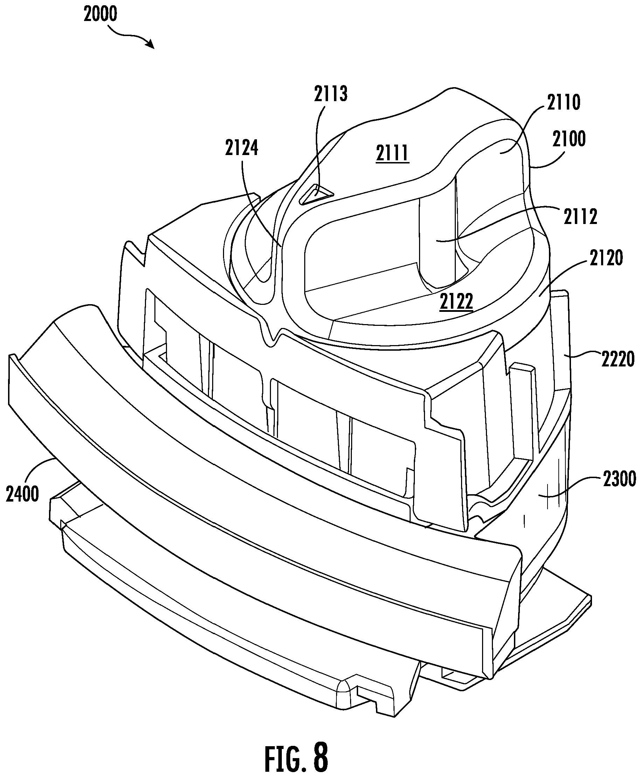

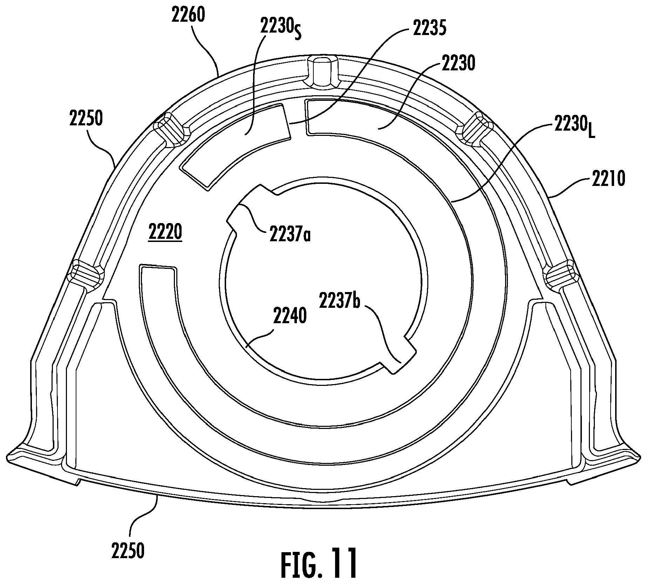

FIGs. 1-7B illustrate a toolless compression mechanism 1000, and related components and methods of assembly, according to a first embodiment disclosed herein. FIGs. 8-13 illustrate a toolless compression mechanism 2000, and related components and methods of assembly, according to a second embodiment disclosed herein. Each compression mechanism is used to close and seal a blind/dummy cable port when a cable has not been incorporated into a closure, and preferably a dome-shaped closure.

Referring to FIG. 1, the toolless compression mechanism 1000 includes an upper compression element 100, an intermediate compression element 200, a sealing element 300, and a lower compression segment 400. The upper compression element 100 is configured to couple with the intermediate compression element 200, the sealing element 300, and the lower compression segment 400. When fully assembled, in preferred embodiments, a force can be applied to the upper compression element 100 such that the upper compression element rotates in a first direction for compression of the upper compression element 100 and the sealing element 300 and rotates in a second direction for release of the upper compression element 100 and the sealing element 300.

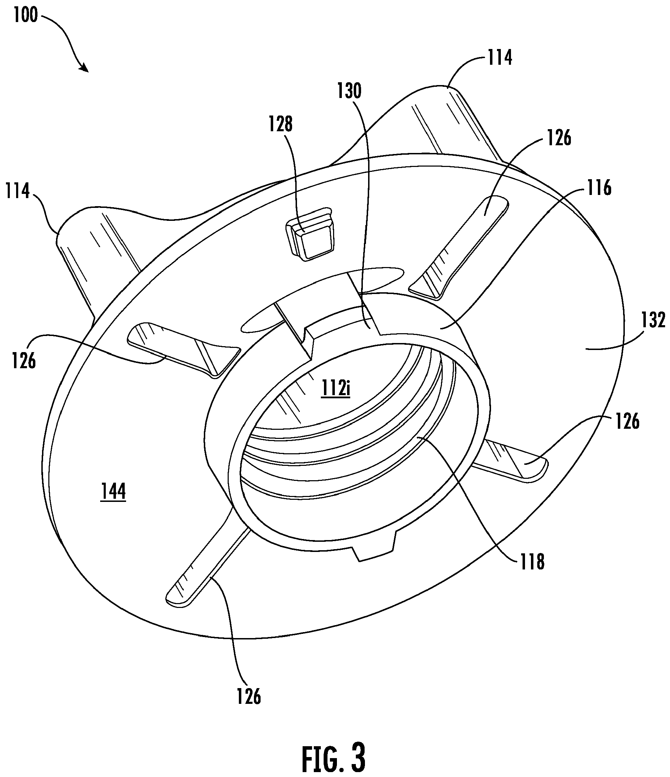

FIGs. 1-3, and 6A-7B illustrate a first embodiment of the upper compression element 100. In some embodiments, the upper compression element 100 is configured as a multi-winged nut and includes a top 110, a hub 112, and a plurality of wings 114 coupled to the hub 112. The top 110 is coupled to the base 120. The base 120 preferably has a substantially circular outer profile and includes an upper base surface 122 having an upper compression indicator 124. FIG. 3 illustrates the underside surface 132 of the base 120 of the upper compression element 100, including the lower base surface 144, the inner portion 112i of the hub 112, a hub extension 116, having inner threads 118, ribs 126, a base locator element 128 and base extension locator elements 130. The inner threads 118 are configured to mate with complementary threads located on the lower compression segment 400. In preferred embodiments, the upper compression element 100 is configured to move up and down a predetermined distance when turned. The movement of the upper compression element 100 in turn compresses the sealing element 300 against a cable port of a closure (not shown). The pitch of the threads is calculated via a proprietary method such that less than 1 turn is required to sufficiently compress the sealing element in accordance with known standards for sealing.

FIGs. 1, 2, 4, and 6A-7B illustrate one embodiment of the intermediate compression element 200, according to one embodiment of the toolless compression mechanisms disclosed herein. Various elements of the intermediate compression element 200 are configured to mate with the locator elements 128, 130 of the upper compression element, as will be further described. The intermediate compression element 200 includes an intermediate element body 210 having an upper intermediate compression surface 220 and an intermediate compression indicator 224. As shown particularly in FIG. 1, the indicators 124, 224 are preferably configured to align (e.g. the points of the triangle shapes) visually indicate when a sufficient amount of compression has been attained in the assembled compression mechanism 1000. To assist with coupling and locating, the intermediate compression element 200 additionally includes a channel 230 incorporated into the upper intermediate compression surface 220. The channel 230 is segmented and includes a plurality of stops 232, 234, 236. Three stops are illustrated in this embodiment, but fewer or additional stops may be included in alternative embodiments. The stops may be further configured within the assembly for release or compression of the sealing element 300. These hard stops also are configured such that the upper compression element is prevented from substantial movement during transport and accidental compression of the sealing element. The intermediate compression element 200 additionally includes a forward rim 250 with extending tangs 252, 254, 256, and a rearward rim 260 that couples with ribs 262.

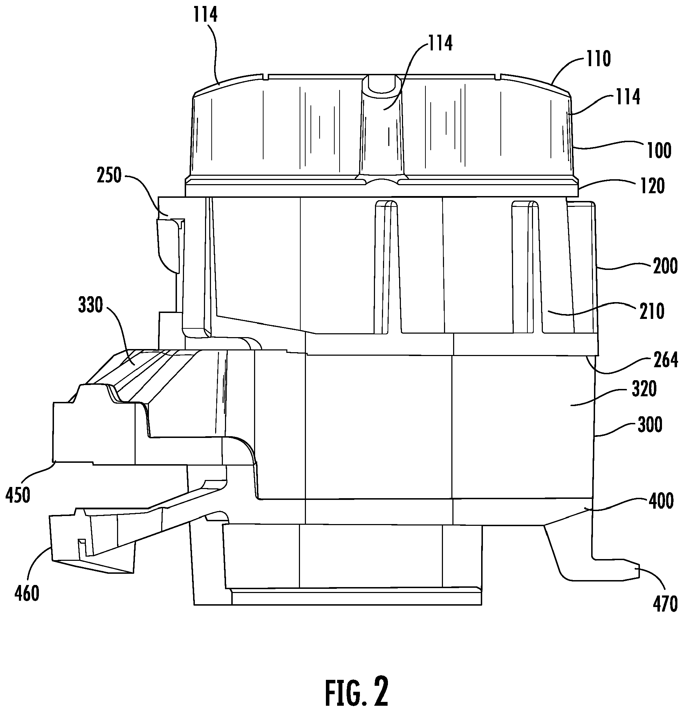

As shown particularly in FIGs. 1 and 2, the sealing element 300 is disposed between the intermediate compression element 200 and the lower compression element 400. The sealing element 300 has an outermost profile that complements the bottommost surface 264 of the intermediate compression element 200 and uppermost body surface 420 of the lower compression element 400. The sealing element comprises gel and/or gel-like materials that preferably have elastic properties sufficient for environmental sealing in accordance with known standards in the telecommunications industry. The sealing element 300 includes a sealing body 320 having a rim 330 and a sealing body segment that couples with the intermediate compression element 200 and the lower compression element 400.

FIGs. 1, 2, and 5 show the lower compression segment 400, according to one embodiment of the toolless compression mechanisms disclosed herein. The lower compression segment 400 shown is one of a plurality of lower compression segments which are preferably included as components of a closure. The plurality of lower compression segments are configured to mate together and form a substantially circular shape that conforms to the interior of the closure.

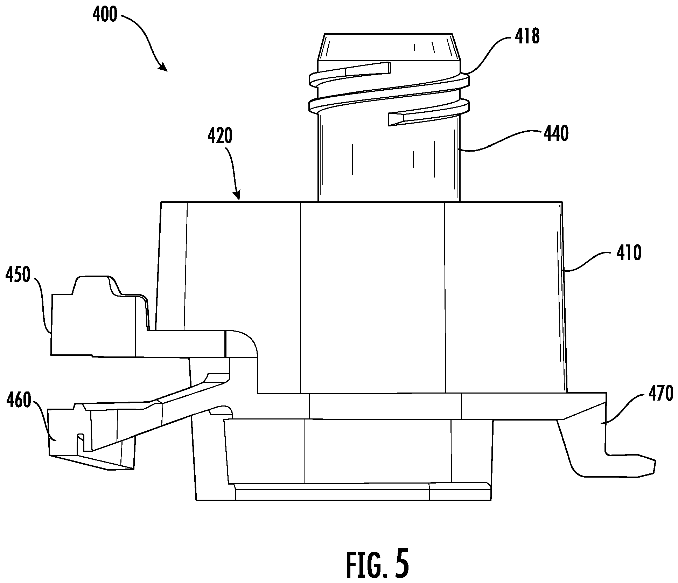

Referring particularly to FIGs. 2 and 5, the lower compression element 400 includes a lower compression body 410 and an extension 440 coupled to and positioned above the body 410. The extension includes threads 418 that complement threads 118 of the upper compression element 100. The body 410 includes an uppermost body surface 420 that mates with the lowermost surface of the sealing element 300 and side extenders 450, 460, 470 configured to mate with components (not shown) of the dome closure.

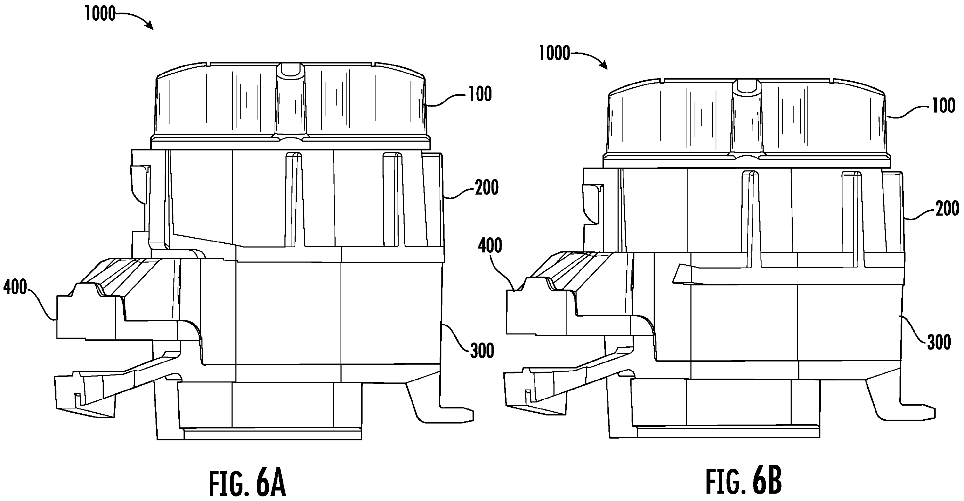

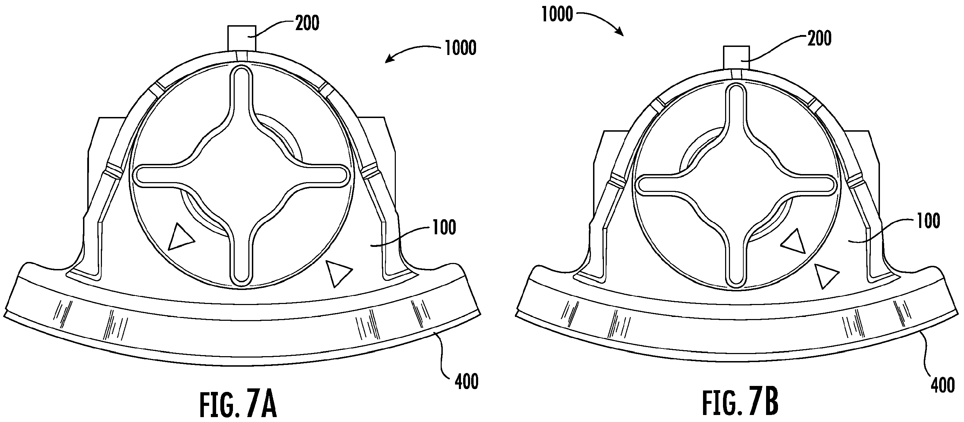

FIGs. 6A and 6B are side isometric views of an assembled toolless compression mechanism in first and second positions, respectively. These views further illustrate the compression of the sealing element 300. In the first view, shown in FIG. 6A, the sealing element is not compressed and has an uncompressed height of H1. In the first view, shown in FIG. 6B, the sealing element 300 is compressed at a reduced height H2. FIGs. 7A and 7B are top isometric views of the assembled toolless compression mechanism 1000 in first and second positions, respectively. Specifically, FIG. 7A shows the upper compression indicator 124 in a first position representing an uncompressed state for the sealing element 300 shown in FIG. 6A. FIG. 7B shows the upper compression indicator in a second position, which is aligned with the intermediate compression indicator 224, representing the compressed state for the sealing element shown in FIG. 6B.

Referring to FIG. 8, the toolless compression mechanism 2000 includes an upper compression element 2100, an intermediate compression element 2200, a sealing element 2300, and a lower compression segment 2400. The upper compression element 2100 is configured to couple with the intermediate compression element 2200, the sealing element 2300, and the lower compression segment 2400. When fully assembled, in preferred embodiments, a force can be applied to the upper compression element 2100 such that the upper compression element rotates in a first direction for compression of the upper compression element 2100 and the sealing element 2300 and rotates in a second direction for release of the upper compression element 2100 and the sealing element 2300.

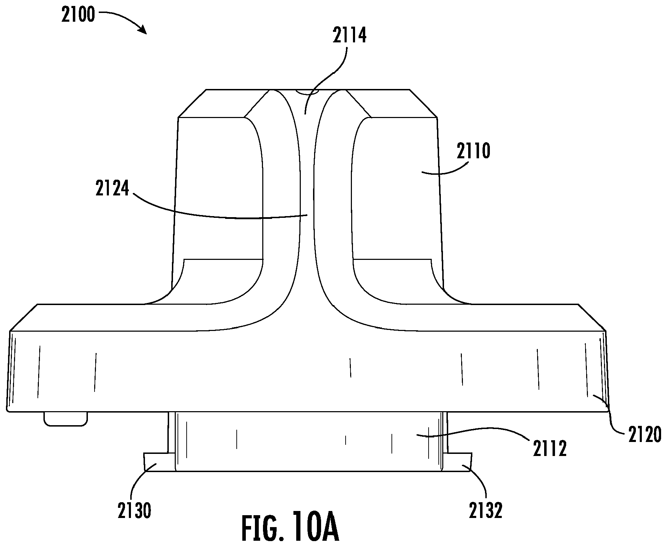

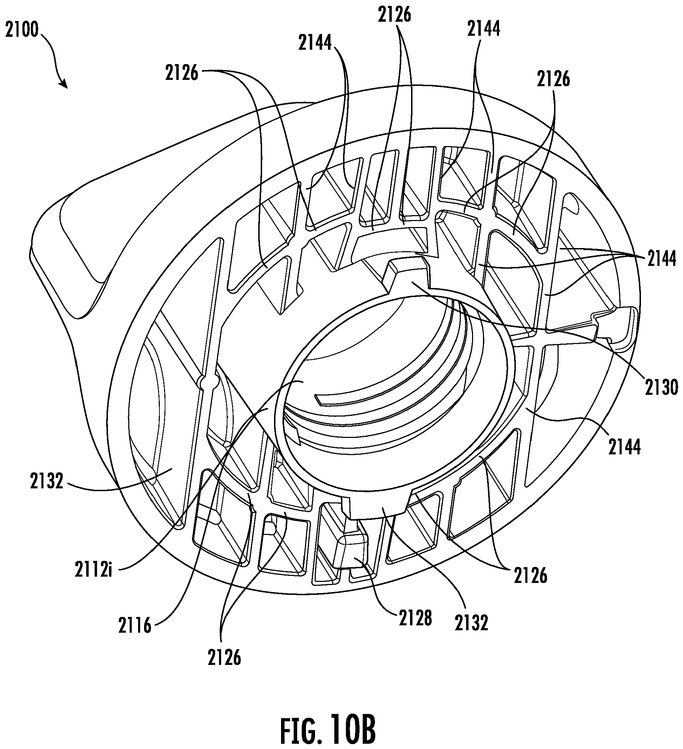

FIGs. 8, 9, 10A, 10B and 13A-13B illustrate a second embodiment of an upper compression element 2100. In some embodiments, the upper compression element 2100 is configured as a single-winged nut and includes a top 2110, a hub 2112, and a wing portion 2114 that extends across the width of the upper compression element 2100. The top 2110 is coupled to the base 2120. The base 2120 preferably has a substantially circular outer profile and includes an upper base surface 2122 coupled to an upper compression indicator 2124. Disposed on a top surface 2111 of the top 2110 is an indicator arrow 2113. FIG. 10B illustrates the underside 2132 of the base 2120 of the upper compression element 2100, including a plurality of base strengthening elements 2144, extending laterally across the base 2120, an inner portion 2112i of the hub 2112, a hub extension 2116, having inner threads 2118, strengthening ribs 2126, a base locator element 2128 and base extension locator elements 2130, 2132. The inner threads 2118 are configured to mate with complementary threads located on the lower compression segment 2400. In preferred embodiments, the upper compression element 2100 is configured to move up and down a predetermined distance when turned. The movement of the upper compression element 2100 in turn compresses the sealing element 2300 against a cable port of a closure (not shown). As with the first embodiment, the pitch of the threads is calculated via a proprietary method such that less than 1 turn is required to sufficiently compress the sealing element 2300 in accordance with known standards for sealing.

FIGs. 8, 9, 11, and 13A-13B illustrate a second embodiment of an intermediate compression element 2200 for use with the toolless compression mechanisms disclosed herein. Various elements of the intermediate compression element 2200 are configured to mate with the locator elements 2128, 2130 of the upper compression element 2100, as will be further described. The intermediate compression element 2200 includes an intermediate element body 2210 having an upper intermediate compression surface 2220.

To assist with coupling and locating, the intermediate compression element 2200 includes a channel 2230 incorporated into the upper intermediate compression surface 2220. The channel 2230 is segmented and includes a channel locating area 2235 disposed between channel segments 2230_{S}, 2230_{L} and locators 2237a, 2237b recessed into an inner rim 2240. Two segments are illustrated in this embodiment, but fewer or additional segments may be included in alternative embodiments. These segments are configured such that the upper compression element is prevented from substantial movement during transport and accidental compression of the sealing element. The intermediate compression element 2200 additionally includes a forward rim 2250 with extending tangs 2252, 2254 and a rearward rim 2260.

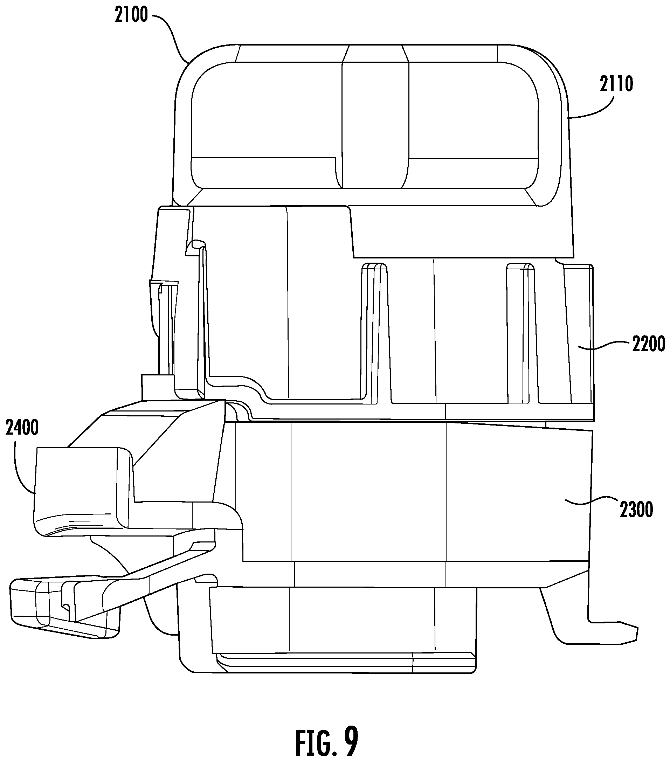

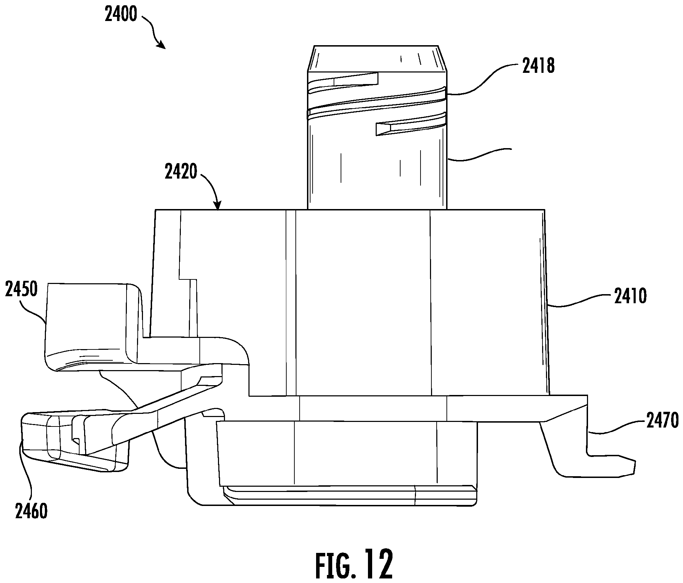

Referring particularly to FIGs. 9 and 12, the lower compression element 2400 includes a lower compression body 2410 and an extension 2440 coupled to and positioned above the body 2410. The extension includes threads 2418 that complement threads 2118 of the upper compression element 2100. The body 2410 includes an uppermost body surface 2420 that mates with the lowermost surface of the sealing element 2300 and side extenders 2450, 2460,2 470 configured to mate with components (not shown) of a closure.

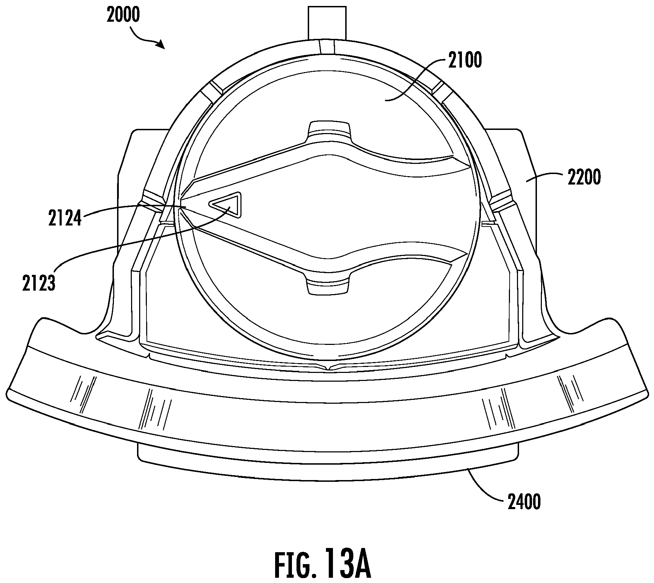

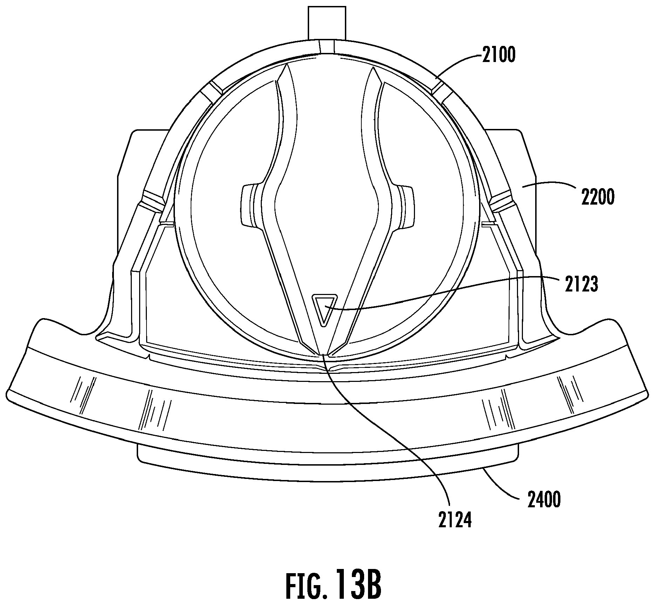

FIGs. 13A and 13B are top isometric views of the assembled toolless compression mechanism 2000 in first and second positions, respectively. Specifically, FIG. 13A shows the compression indicator 2124 in a first position representing an uncompressed state for the sealing element 2300 shown. FIG. 13B shows the upper compression indicator 2124 in a second position, representing the compressed state for the sealing element 2300 shown in FIG. 8.

It will be apparent to those skilled in the art that various modifications and variations can be made without departing from the spirit or scope of the disclosed embodiments. Since modifications combinations, sub-combinations and variations of the disclosed embodiments incorporating the spirit and substance of the embodiments may occur to persons skilled in the art, the disclosed embodiments should be construed to include everything within the scope of the appended claims and their equivalents.

## Claims

1. A toolless compression mechanism, comprising:
an upper compression element having a plurality of wings surrounding a hub, a base having a locator element positioned on an underside surface of the base, and a hub extension having inner threads disposed therein;
an intermediate compression element having an upper intermediate compression surface having a channel that upon assembly of the toolless compression mechanism mates with upper compression element;
a lower compression segment having an extension with threads that mates with the inner threads of the upper compression element, and
a sealing element positioned between the intermediate compression element and the lower compression segment,
wherein when turned, the upper compression element is displaced along the extension such that the sealing element is compressed.

2. The toolless compression mechanism of claim 1, wherein the locator element of the base is positionable within the channel of the intermediate compression element.

3. The toolless compression mechanism of any one of claims 1-2, wherein the upper compression mechanism further comprises an upper compression indicator disposed on the base and an intermediate compression indicator disposed on the intermediate compression element.

4. The toolless compression mechanism of any one of claims 1-3, wherein the upper compression element moves when turned and mated with the lower compression element.

5. The toolless compression mechanism of any one of claims 1-3, wherein the upper compression element moves downwardly when turned clockwise and mated with the lower compression element.

6. The toolless compression mechanism of any one of claims 1-5, wherein the base of the upper compression element has a circular outer profile.

7. The toolless compression mechanism of any one of claims 1-6, wherein the upper compression mechanism further comprises base locator elements that facilitate mating of the upper compression mechanism with the intermediate compression mechanism.

8. The toolless compression mechanism of any one of claims 1-7, wherein the channel is segmented.

9. The toolless compression mechanism of any one of claims 1-7, wherein the channel includes a plurality of stops.

10. The toolless compression mechanism of any one of claims 1-6, wherein the upper compression mechanism further comprises a plurality of ribs disposed on the base.

11. A toolless compression mechanism, comprising:
an upper compression element having a winged portion surrounding a hub and a locator element, and a hub extension having inner threads disposed therein;
an intermediate compression element having an upper intermediate compression surface having a channel that upon assembly of the toolless compression mechanism mates with upper compression element;
a lower compression segment having an extension with threads that mates with the inner threads of the upper compression element, and
a sealing element positioned between the intermediate compression element and the lower compression segment,
wherein when turned, the upper compression element is displaced along the extension such that the sealing element is compressed.

12. The toolless compression mechanism of claim 11, wherein the locator element is moveable from a first position to a second position.

13. The toolless compression mechanism of any one of claims 11-12, wherein the upper compression element moves when turned and mated with the lower compression element.

14. The compression mechanism of any one of claims 11-13, wherein the channel is segmented.

15. The toolless compression mechanism of any one of claims 11-13, wherein the upper compression element moves downwardly when rotated and mated with the lower compression element.
